# EUROPÄISCHE PATENTSCHRIFT

(11) **EP 2 896 788 B1**
(45) Veröffentlichungstag und Bekanntmachung des Hinweises auf die Patenterteilung: **03.04.2019**
(21) Anmeldenummer: 14195641.7
(22) Anmeldetag: 01.12.2014
(51) Int. Cl.: F01D 5/14, B21C 23/00, F01D 9/04

(54) **STRANGRPROFIL ZUR HERSTELLUNG EINER LEITSCHAUFEL UND HERSTELLUNGSVERFAHREN**
EXTRUDED PROFILE FOR PRODUCING A GUIDE VANE AND FABRICATION METHOD
PROFILÉ EXTRUDÉ DESTINÉ À LA FABRICATION D'UNE AUBE DE REDRESSEUR ET PROCÉDÉ DE FABRICATION

(30) Priorität: 16.01.2014 DE 102014200644
(43) Veröffentlichungstag der Anmeldung: 22.07.2015
(73) Patentinhaber: MTU Aero Engines AG, 80995 München (DE)
(72) Erfinder: Hoeger, Martin, 85435 Erding (DE)

(56) Entgegenhaltungen:
- EP-A2- 0 816 637
- US-A- 3 565 548
- US-A1- 2003 031 564
- US-A1- 2007 292 274

## Beschreibung

Die Erfindung betrifft ein Strangprofil zur Herstellung einer Schaufel eines Nachleitrads einer Turbomaschine. Weiterhin betrifft die Erfindung ein Verfahren zum Herstellen einer Schaufel eines Nachleitrads einer Turbomaschine unter Verwendung eines solchen Strangprofils.

In Turbomaschinen werden durch den Einbau eines feststehenden Nachleitrads (so genanntes TEC) Druckerhöhungen erreicht, indem Drall aus der Abströmung herausgenommen und so der Vortriebswirkungsgrad verbessert wird. Neuere Triebwerksarchitekturen legen dabei Wert auf die Verwendung möglichst dünner Nachleiträder, die Schaufeln mit vergleichsweise kurzen Sehnenlängen aufweisen. Insbesondere wenn das Nachleitrad als so genanntes MiniTEC ausgeführt wird, sind vergleichsweise hohe Schaufelzahlen gefordert, sodass die einzelnen Schaufeln sehr schlanke Bauformen mit kurzen Sehnenlängen und dünnen Profilen aufweisen müssen. Die Fertigung der Schaufeln erfolgt dabei üblicherweise aus zwei gebogenen Blechhälften, die miteinander verschweißt werden.

Die optimale Profilform solcher Schaufeln kann aber nur durch weitere Nachbearbeitungsschritte verwirklicht werden, die mit hohem Zeit- und Kostenaufwand verbunden sind. Daher wird teilweise auf diese zur Ausbildung präziser Profilformen erforderlichen Nachbearbeitungsschritte verzichtet. Dies führt jedoch im Betrieb einer zugeordneten Turbomaschine aufgrund von Schweißnähten an den Vorderkanten der Schaufeln oder aufgrund von sonstigen Bauformabweichungen zu Strömungsverlusten und entsprechenden Wirkungsgradeinbußen.

Aus der EP 0 816 637 A2 ist es bereits bekannt, eine Profilform einer Schaufel eines so genannten FEGV (fan exit guide vane) durch Strangpressen zu gewinnen. Dabei wird in der EP 0 816 637 A2 vorgeschlagen, das extrudierte Strangpressprofil nur noch auf die passende Länge für die Schaufeln zurechtzuschneiden und ggf. die Oberfläche zu behandeln, bevor die Schaufeln verbaut werden. Mit anderen Worten weist das Strangpressprofil bereits die aerodynamische Endkontur der fertigen Schaufel auf, welches sich somit über die gesamte radiale Höhe auch nicht ändert.

Aufgabe der vorliegenden Erfindung ist es, eine schnellere, einfachere und kostengünstigere Möglichkeit zur Herstellung einer Schaufel für derartige Nachleiträder anzugeben. Eine weitere Aufgabe der Erfindung ist, ein schnelleres, einfacheres und kostengünstigeres Verfahren zum Herstellen einer Schaufel zu schaffen. Weitere Aufgaben der Erfindung bestehen darin, eine schneller, einfacher und kostengünstiger herstellbare Schaufel, ein entsprechendes Nachleitrad mit wenigstens einer solchen Schaufel sowie eine Turbomaschine mit einem solchen Nachleitrad bereitzustellen.

Die Aufgaben werden erfindungsgemäß durch ein Strangprofil mit den Merkmalen des Patentanspruchs 1, sowie durch ein Verfahren gemäß Anspruch 7 zum Herstellen einer Schaufel eines Nachleitrads Vorteilhafte Ausgestaltungen mit zweckmäßigen Weiterbildungen der Erfindung sind in den jeweiligen Unteransprüchen angegeben.

Ein erster Aspekt der Erfindung betrifft ein Strangprofil nach Anspruch 1.

Das erfindungsgemäße Strangprofil, welches grundsätzlich als "Endlosprofil", das heißt mit einer beliebigen Länge, hergestellt werden kann, ermöglicht eine wesentlich schnellere, einfachere und kostengünstigere Herstellung einer Schaufel für derartige Nachleiträder als dies beispielsweise mit Hilfe von miteinander zu verschweißenden Blechrohlingen möglich wäre, da das Strangprofil bereits die geforderte Querschnittsgeometrie einer Schaufel für ein Nachleitrad aufweist. Das erfindungsgemäße Strangprofil, das auch als profilierter 2D Rohling oder Halbzeug bezeichnet werden kann, kann beispielsweise durch einfaches Umformen und ohne weitere Nachbearbeitungsschritte in eine TEC Schaufel mit einer dreidimensionalen Formgebung umgeformt werden, wobei trotz geringer Sehnenlängen, Vorderkantendicken und Reynoldzahlen eine hochgenaue und aerodynamisch optimale Vorderkantenform verwirklicht werden kann. Etwaige Geometrieabweichungen infolge des Umformens haben dabei aufgrund der spezifischen Querschnittsflächengestaltung des erfindungsgemäßen Strangprofils nur einen sehr geringen Einfluss auf die Aerodynamik der fertigen Schaufel. Ein weiterer Vorteil des erfindungsgemäßen Strangprofils besteht darin, dass TEC Schaufeln und insbesondere sogenannte Mini TEC Schaufeln in der Regel nur eine geringe Wölbung und axiale Abströmung haben, so dass eine exakte Profilform in erster Linie an der im erfindungsgemäßen Strangprofil bereits fertig ausgebildeten Vorderkante benötigt wird. Weiterhin kann vorgesehen sein, dass das Strangprofil zusätzlich an seiner Hinterkante zurückgeschnitten wird, so dass auf besonders einfache Weise Schaufeln mit unterschiedlichen radialen und/oder axialen Erstreckungen aus demselben Strangprofil herstellbar sind. Somit erlaubt das erfindungsgemäße Strangprofil auch eine besonders variable und kostengünstige Herstellung präzise geformter Schaufeln für Nachleiträder, wodurch ein besonders zuverlässiger und effizienter Betrieb einer zugeordneten Turbomaschine ermöglicht wird. Beispielsweise verbessert sich der Wirkungsgrad einer mit einem solchen Nachleitrad ausgerüsteten Niederdruckturbine um mindestens 0,1 % bei gleichzeitig verringerten Fertigungskosten.

In einer vorteilhaften Ausgestaltung der Erfindung ist vorgesehen, dass der Vorderkantenbereich und/oder der Hinterkantenbereich zumindest im Wesentlichen kreissegmentförmig mit einem Kreissegmentdurchmesser zwischen 1 % und 5 % LAX, insbesondere zwischen 2 % und 4 % LAX ausgebildet ist. Mit anderen Worten ist es vorgesehen, dass der Vorderkantenbereich und/oder der Hinterkantenbereich zumindest annähernd kreissegmentförmig ausgebildet ist, wobei der Durchmesser des Kreissegments beispielsweise 1,0 %, 1,1 %, 1,2 %, 1,3 %, 1,4 %, 1,5 %, 1,6 %, 1,7 %, 1,8 %, 1,9 %, 2,0 %, 2,1 %, 2,2 %, 2,3 %, 2,4 %, 2,5 %, 2,6 %, 2,7 %, 2,8 %, 2,9 %, 3,0 %, 3,1 %, 3,2 %, 3,3 %, 3,4 %, 3,5 %, 3,6 %, 3,7 %, 3,8 %, 3,9 %, 4,0 %, 4,1 %, 4,2 %, 4,3 %, 4,4 %, 4,5 %, 4,6 %, 4,7 %, 4,8 %, 4,9 % oder 5,0 % der axialen Länge des Strangprofils beträgt. Hierdurch wird eine strömungsoptimierte und hochgenaue Vorder- bzw. Hinterkantengeometrie der späteren Schaufel sichergestellt. Vorzugsweise ist das Kreissegment zumindest annähernd halbkreisförmig bzw. weist einen Mittelpunktswinkel von etwa 180° auf, wobei grundsätzlich auch abweichende Mittelpunktswinkel über oder unter 180° vorgesehen sein können.

In einer weiteren vorteilhaften Ausgestaltung der Erfindung ist vorgesehen, dass der erste Konstantbereich eine relative Dicke D/LAX zwischen 3 % und 6 % LAX, vorzugsweise von etwa 4 % LAX besitzt und/oder dass sich der erste Konstantbereich bezogen auf die Vorderkante des Strangprofils im Bereich von etwa 20 % bis etwa 40 % LAX erstreckt. Mit anderen Worten ist es vorgesehen, dass der erste Konstantbereich eine Dicke D/LAX aufweist, die 3,0 %, 3,1 %, 3,2 %, 3,3 %, 3,4 %, 3,5 %, 3,6 %, 3,7 %, 3,8 %, 3,9 %, 4,0 %, 4,1 %, 4,2 %, 4,3 %, 4,4 %, 4,5 %, 4,6 %, 4,7 %, 4,8 %, 4,9 %, 5,0 %, 5,1 %, 5,2 %, 5,3 %, 5,4 %, 5,5 %, 5,6 %, 5,7 %, 5,8 %, 5,9 % oder 6,0 % der axialen Länge LAX des Strangprofils beträgt. Alternativ oder zusätzlich ist vorgesehen, dass sich der erste Konstantbereich ausgehend von der Vorderkante des Strangprofils in einem Bereich von etwa 20 % bis etwa 40 % der axialen Länge LAX des Strangprofils erstreckt und somit eine Länge aufweist, die etwa 20 % der axialen Länge LAX des Strangprofils entspricht. Hierdurch kann das Strangprofil besonders einfach sowohl zur Herstellung von Schaufeln mit kurzer als auch mit langer Bauform verwendet werden.

Weitere Vorteile ergeben sich dadurch, dass der erste Übergangsbereich eine axiale Länge X von höchstens 20 % LAX aufweist und/oder dass der zweite Übergangsbereich bezogen auf die Vorderkante des Strangprofils spätestens bei etwa 80 % LAX endet. Mit anderen Worten ist es vorgesehen, dass der erste Übergangsbereich eine axiale Länge X von höchstens 20 % LAX, also beispielsweise von 1 %, 2 %, 3 %, 4 %, 5 %, 6 %, 7 %, 8 %, 9 %, 10 %, 11 %, 12 %, 13 %, 14 %, 15 %, 16 %, 17 %, 18 %, 19 % oder 20 % LAX aufweist. Dies erlaubt eine besonders einfache Herstellung einer Schaufel mit einem asymmetrischen Vorderkantenbereich. Alternativ oder zusätzlich ist es vorgesehen, dass der zweite Übergangsbereich, der zwischen dem ersten und dem zweiten Konstantbereich angeordnet ist, spätestens bei 80 % der Länge LAX des Strangprofils endet. In Abhängigkeit der Anordnung und Länge des ersten Konstantbereichs kann somit beispielsweise vorgehen sein, dass der zweite Übergangsbereich bei 40 %, 41 %, 42 %, 43 %, 44 %, 45 %, 46 %, 47 %, 48 %, 49 %, 50 %, 51 %, 52 %, 53 %, 54 %, 55 %, 56 %, 57 %, 58 %, 59 %, 60 %, 61 %, 62 %, 63 %, 64 %, 65 %, 66 %, 67 %, 68 %, 69 %, 70 %, 71 %, 72 %, 73 %, 74 %, 75 %, 76 %, 77 %, 78 %, 79 % oder 80 % der Länge LAX des Strangprofils endet bzw. dass der zweite Übergangsbereich eine axiale Länge aufweist, die zwischen etwa 10 % und etwa 50 % der axialen Länge LAX des Strangprofils beträgt. Dies erlaubt eine besonders präzise Einstellung der aerodynamischen Eigenschaften einer aus dem Strangprofil hergestellten Schaufel.

Erfindungsgemäß weist das Strangprofil eine Saugseite mit einer entlang der axialen Länge LAX zumindest überwiegend ebenen Saugseitengrundform auf. Mit anderen Worten ist es vorgesehen, dass das Strangprofil eine Seite aufweist, die bei der späteren Schaufel als Saugseite fungiert, wobei diese Seite des Strangprofils über eine Länge, die mindestens 51 % der gesamten axialen Länge LAX des Strangprofils entspricht, eben ausgebildet ist. Grundsätzlich kann diese Seite natürlich auch eine größere axiale Erstreckung, beispielsweise 55 %, 60 %, 65 %, 70 %, 75 %, 80 %, 85 %, 90 % oder 95 % LAX oder entsprechende Zwischenwerte wie beispielsweise 55 %, 56 %, 57 %, 58 %, 59 %, 60 % LAX usw. besitzen. Hierdurch kann aus dem Strangprofil durch einfaches Umformen eine Schaufel mit einer aerodynamisch besonders günstig geformten Saugseite hergestellt werden.

In einer weiteren vorteilhaften Ausgestaltung der Erfindung ist vorgesehen, dass das Strangprofil eine Druckseite mit einer zumindest im Bereich des zweiten Übergangsbereichs etwa S-förmig gekrümmten Druckseitengrundform aufweist. Anders ausgedrückt weist das Strangprofil eine der Saugseite gegenüberliegende Seite auf, die bei der späteren Schaufel als Druckseite fungiert, wobei diese im zweiten Übergangsbereich, welcher in axialer Richtung eine variable Querschnittsdicke aufweist, einen etwa S-förmigen Konturverlauf besitzt. Hierdurch wird auf konstruktiv einfache Weise sichergestellt, dass durch einfaches Umformen des Strangprofils eine Schaufel mit einer aerodynamisch besonders günstig geformten Druckseite hergestellt werden kann.

In einer weiteren vorteilhaften Ausgestaltung der Erfindung ist vorgesehen, dass das Strangprofil aus Metall und/oder einer Metalllegierung, insbesondere einer hochtemperaturfesten Metalllegierung besteht und/oder durch Strangpressen hergestellt ist. Dies ermöglicht eine einfache Anpassung des Strangprofils an die Einsatzbedingungen der späteren Schaufel. Besondere Vorteile des Strangpressens bestehen in der Möglichkeit, Profile mit komplexen Querschnittsgeometrien aus schwer umformbaren Werkstoffen herzustellen. Weiterhin wird in einem einzigen Verfahrensschritt ein hoher Umformgrad bei gleichzeitig geringen Werkzeugkosten erreicht.

Ein zweiter Aspekt der Erfindung betrifft ein Verfahren zum Herstellen einer Schaufel eines Nachleitrads einer Turbomaschine, bei welchem ein Strangprofil gemäß dem ersten Erfindungsaspekt bereitgestellt und die Schaufel aus dem Strangprofil mittels wenigstens eines Fertigungsverfahrens aus der Gruppe Umformverfahren und Trennverfahren hergestellt wird. Mit anderen Worten wird eine Schaufel für ein Nachleitrad aus einem Strangprofil gemäß dem ersten Erfindungsaspekt durch Umformen und/oder Trennen hergestellt, wobei das Strangprofil seinerseits beispielsweise durch Strangpressen hergestellt sein kann. Die Wahl des Fertigungsverfahrens hängt in erster Linie von der gewünschten dreidimensionalen Form der herzustellenden Schaufel ab. In einfachster Ausgestaltung kann das Strangprofil somit lediglich umgeformt oder getrennt werden. Alternativ kann das Strangprofil sowohl umgeformt als auch getrennt werden, wobei die Reihenfolge der einzelnen Verfahrensschritte grundsätzlich frei wählbar ist. Ebenso kann grundsätzlich vorgesehen sein, dass das Strangprofil mehrfach umgeformt und/oder getrennt wird, um die Schaufel herzustellen. Das erfindungsgemäße Verfahren ermöglicht somit eine wesentlich schnellere, einfachere und kostengünstigere Herstellung einer Schaufel für ein Nachleitrad als dies beispielsweise mit Hilfe von miteinander zu verschweißenden Blechrohlingen möglich wäre, da das Strangprofil bereits die geforderte Querschnittsgeometrie einer Schaufel für ein Nachleitrad aufweist und lediglich noch leicht gebogen bzw. überwölbt und/oder getrennt werden muss, um die fertige Schaufel auszubilden. Weitere Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

In einer vorteilhaften Ausgestaltung der Erfindung ist vorgesehen, dass zum Herstellen der Schaufel zumindest die Schritte Umformen des Strangprofils zumindest im Vorderkantenbereich und Trennen des Strangprofils in wenigstens einem dem ersten Übergangsbereich nachgelagerten Bereich durchgeführt werden. Hierdurch kann die Schaufel besonders einfach sowohl mit einer gewünschten dreidimensionalen Kontur als auch mit einer gewünschten radialen bzw. axialen Länge hergestellt werden. Der dem ersten Übergangsbereich nachgelagerte Bereich kann dabei der erste Konstantbereich, der zweite Übergangsbereich, der zweite Konstantbereich, der Hinterkantenbereich oder eine beliebige Kombination dieser Bereiche sein. Als Trennverfahren kann beispielsweise ein spanendes Verfahren mit einer geometrisch bestimmten Schneide oder ein Abtragverfahren wie beispielsweise Laser- oder Elektronenschneiden vorgesehen sein, wobei das erfindungsgemäße Verfahren nicht auf ein bestimmtes Trennverfahren beschränkt ist.

Weitere Vorteile ergeben sich, wenn das Strangprofil im zweiten Konstantbereich und/oder entlang einer senkrecht zur Querschnittsfläche angeordneten Schnittebene und/oder entlang einer parallel zur Querschnittsfläche angeordneten Schnittebene und/oder entlang einer in einem Winkel zur Querschnittsfläche angeordneten Rückschnittebene getrennt wird. Dies erlaubt ein gezieltes Rückschneiden des Strangprofils bzw. der aus diesem hergestellten Schaufel.

Offenbart sei hiermit außerdem eine Schaufel eines Nachleitrads einer Turbomaschine, wobei die Schaufel aus einem Strangprofil gemäß dem ersten Erfindungsaspekt und/oder mittels eines Verfahrens gemäß dem zweiten Erfindungsaspekt erhältlich und/oder erhalten ist. Hierdurch kann die Schaufel schneller, einfacher und kostengünstiger hergestellt sein bzw. werden, als dies beispielsweise mit Hilfe von miteinander zu verschweißenden Blechrohlingen möglich wäre. Weitere sich ergebende Merkmale und deren Vorteile sind den Beschreibungen des ersten und des zweiten Erfindungsaspekts zu entnehmen.

Ebenfalls offenbart sei ein Nachleitrad für eine Turbomaschine, wobei dieses wenigstens eine Schaufel umfasst, die aus einem Strangprofil gemäß dem ersten Erfindungsaspekt erhalten ist. Hierdurch kann das Nachleitrad schneller, einfacher und kostengünstiger hergestellt sein bzw. werden, als dies beispielsweise mit Hilfe von konventionellen Schaufeln möglich wäre, die aus miteinander verschweißten Blechrohlingen bestehen.

Es ist vorgesehen, dass das Nachleitrad wenigstens zwei Schaufeln umfasst, die aus einem Strangprofil gemäß dem ersten Erfindungsaspekt erhalten sind, wobei die wenigstens zwei Schaufeln unterschiedliche axiale Längen aufweisen. Hierdurch kann die längere der Schaufeln zusätzlich strukturelle Aufgaben übernehmen, wodurch die Belastbarkeit des Nachleitrads vorteilhaft gesteigert ist. Abschließend sei eine Turbomaschine offenbart, insbesondere ein Flugzeugtriebwerk, mit wenigstens einem Nachleitrad wie oben beschrieben.

Hierdurch können einerseits die Herstellungskosten der Turbomaschine gesenkt und andererseits der Wirkungsgrad der Turbomaschine um mindestens 0,1 % gesteigert werden.

Es ist vorgesehen, dass das Nachleitrad im Bereich eines Turbinenaustritts der Turbomaschine angeordnet ist. Dies ermöglicht eine besonders hohe Wirkungsgradsteigerung, indem während des Betriebs der Turbomaschine Drall aus der Abströmung herausgenommen und so der Vortriebswirkungsgrad verbessert wird.

Weitere Merkmale der Erfindung ergeben sich aus den Ansprüchen, dem Ausführungsbeispiel sowie anhand der Zeichnung. Die vorstehend in der Beschreibung genannten Merkmale und Merkmalskombinationen sowie die nachfolgend in dem Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: eine Prinzipdarstellung eines Turbinenaustrittsbereichs eines Flugzeugtriebwerks;
- Fig. 2: einen Querschnitt durch ein erfindungsgemäßes Strangprofil;
- Fig. 3: eine schematische Perspektivansicht des Strangprofils, welches zu einer Schaufel umgeformt und getrennt wird; und
- Fig. 4: eine schematische Perspektivansicht der aus dem Strangprofil hergestellten Schaufel.

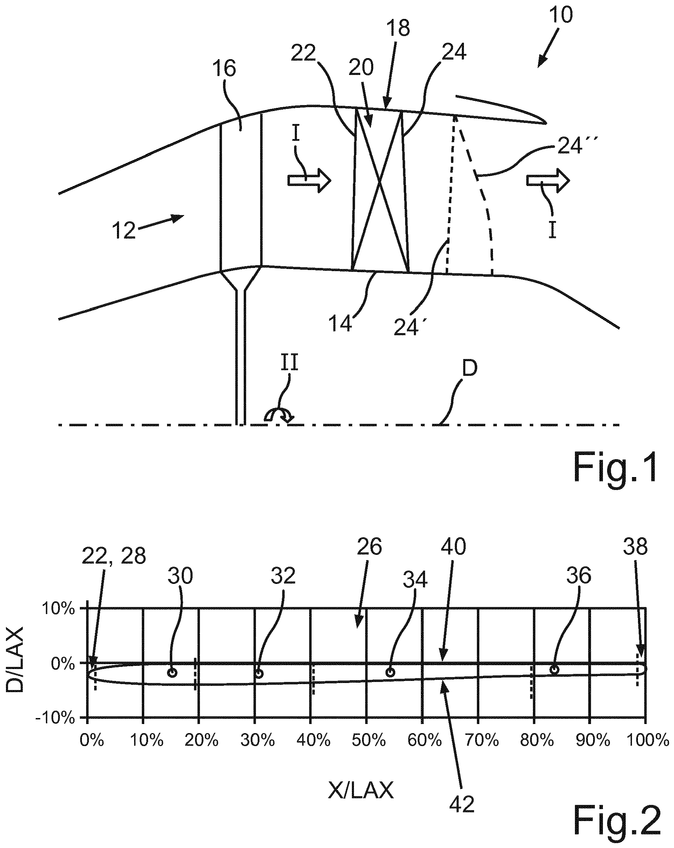

Fig. 1 zeigt eine Prinzipdarstellung eines Flugzeugtriebwerks 10 im Bereich eines Turbinenaustritts 12. Man erkennt einen Ringraum 14, der stromab eines letzten Rotors 16 einer Niederdruckturbine des Flugzeugtriebwerks 10 angeordnet ist, wobei der Rotor 16 gemäß Pfeil II um eine Drehachse D rotiert. Die Strömungsrichtung des Betriebsfluids ist mit den Pfeilen I gekennzeichnet. Im Ringraum 14 ist ein erfindungsgemäßes Nachleitrad 18 angeordnet, welches auch als TEC bezeichnet wird. Das Nachleitrad 18 umfasst mehrere ringförmig im Ringraum 14 angeordnete Schaufeln 20, die in Strömungsrichtung I betrachtet jeweils eine Vorderkante 22 und eine Hinterkante 24 aufweisen. Je nach Bauform können eine oder mehrere der Schaufeln 20 unterschiedliche axiale Erstreckungen aufweisen. Die Hinterkante 24 entspricht dabei einer moderneren Bauform mit vergleichsweise kurzen Schaufeln 20, während die Hinterkante 24' einer moderneren Bauform mit längeren Schaufeln 20 und die Hinterkante 24" einer älteren Bauform mit langen Schaufeln 20 entspricht.

Alle diese Schaufeln 20 können mit Hilfe eines erfindungsgemäßen Strangprofils 26 besonders schnell, einfach und kostengünstig hergestellt werden. Fig. 2 zeigt zur Verdeutlichung einen Querschnitt durch ein Ausführungsbeispiel eines erfindungsgemäßen ebenen Strangprofils 26. Man erkennt, dass das Strangprofil 26 eine durch Strangpressen spezifisch ausgestaltete Querschnittsfläche mit einer axialen Länge LAX und einer entlang der Querschnittsfläche variierenden Dicke D aufweist, wobei die Dicke D bezogen auf die axiale Länge LAX als relative Dicke D/LAX angegeben ist. Die Querschnittsfläche des Strangprofils 26 weist dabei entlang ihrer axialen Länge LAX mehrere aneinander anschließende Bereiche auf. Zunächst umfasst das Strangprofil 26 einen zumindest annähernd achsensymmetrischen Vorderkantenbereich 28, der im Querschnitt wenigstens ungefähr einem Halbkreissegment mit einem Durchmesser von 2 bis 4 % LAX entspricht und dementsprechend eine davon abhängige axiale Erstreckung von etwa 1 % bis etwa 4 % LAX aufweist. An den Vorderkantenbereich 28, der die Vorderkante 22 der fertigen Schaufel 20 bildet, schließt sich ein erster Übergangsbereich 30 mit einer entlang des ersten Übergangsbereichs 30 variierenden relativen Dicke D und einer axialen Länge X von höchstens 20 % LAX an. An den ersten Übergangsbereich 30 schließt ein erster Konstantbereich 32 mit einer entlang des ersten Konstantbereichs 32 zumindest im Wesentlichen konstanten relativen Dicke D an, die im gezeigten Ausführungsbeispiel zwischen etwa 3 % und etwa 6 % LAX beträgt. Man erkennt, dass sich der erste Konstantbereich 32 bezogen auf die Vorderkante 22 des Strangprofils 26 im Bereich von etwa 20 % bis etwa 40 % LAX erstreckt und dementsprechend eine Länge von 20 % LAX aufweist. An den ersten Konstantbereich 32 schließt sich ein zweiter Übergangsbereich 34 mit einer entlang des zweiten Übergangsbereichs 34 variierenden relativen Dicke D/LAX an. Der zweite Übergangsbereich 34 beginnt im gezeigten Ausführungsbeispiel bei etwa 40 % LAX und endet bei etwa 80 % LAX, so dass der zweite Übergangsbereich 34 eine Länge von etwa 40 % LAX besitzt. An den zweiten Übergangsbereich 34 schließt ein zweiter Konstantbereich 36 an, der eine entlang des zweiten Konstantbereichs 36 zumindest im Wesentlichen konstante relative Dicke D/LAX und eine axialen Länge X von etwa 27 % LAX aufweist bzw. bei etwa 97 % LAX endet. An den zweiten Konstantbereich 36 schließt ein Hinterkantenbereich 38 an, der analog zum Vorderkantenbereich 28 im Querschnitt zumindest annähernd halbkreisförmig mit einem Durchmesser zwischen etwa 2 % und etwa 4 % LAX ausgebildet ist. Je nach konkreter Ausgestaltung und Art der Weiterverarbeitung des Strangprofils 26 kann der Hinterkantenbereich 38 beispielsweise die Hinterkante 24" (ältere Bauform), die Hinterkante 24' (modernere Bauform, lange Schaufel) oder die Hinterkante 24 (modernere Bauform, kurze Schaufel) einer Schaufel 20 bilden.

Wie man in Fig. 2 weiterhin erkennt, weist das Strangprofil 26 eine zumindest im Wesentlichen ebene Saugseite 40 auf, die sich von etwa 10 % LAX bis etwa 99 % LAX erstreckt und bei der fertigen Schaufel 20 die Saugseite bildet. Dabei sind insbesondere der Vorderkantenbereich 28 und ein bis etwa 10 % LAX reichender Abschnitt des ersten Übergangsbereichs 30 von der entlang der Nulllinie verlaufenden ebenen Saugseitengrundform der Saugseite 40 ausgenommen, da sie gegenüber dieser formal abgesenkt sind und zusammen einen asymmetrischen Vorderbereich des Strangprofils 26 bilden. Gegenüber der Saugseitengrundform 40 weist das Strangprofil 26 weiterhin eine Druckseite 42 auf. Man erkennt im Querschnitt, dass die Druckseite 42 im Unterschied zur Saugseitengrundform 40 einen variierenden Konturverlauf besitzt und im Bereich des zweiten Übergangsbereichs 34 etwa S-förmig gekrümmt ist bzw. einen Wendepunkt umfasst und formal von einer Rechts- in eine Linkskurve wechselt.

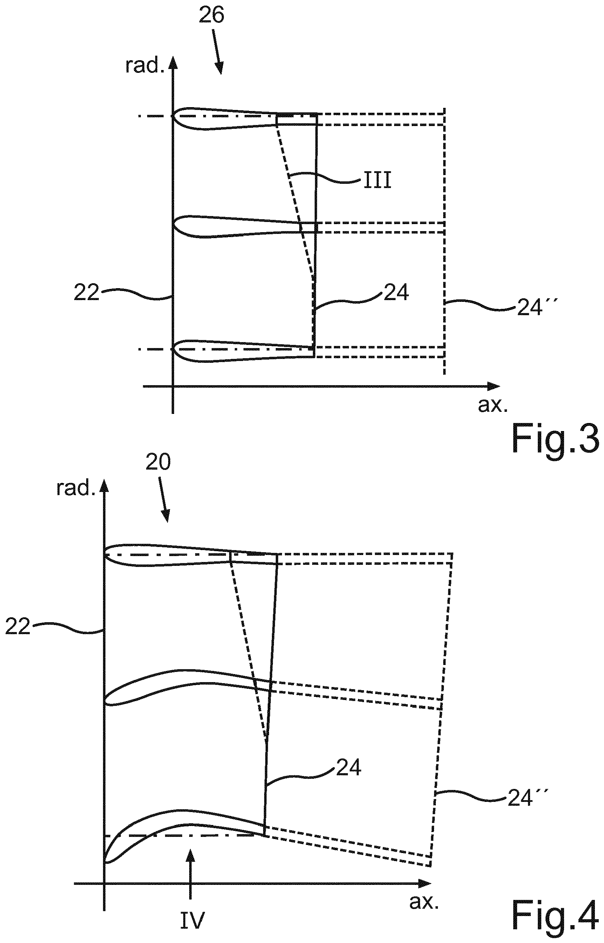

Fig. 3 zeigt eine schematische Perspektivansicht des in Fig. 2 gezeigten Strangprofils 26, aus welchem durch Umformen und Trennen eine Schaufel 20 für ein Nachleitrad 18 hergestellt wird, wobei die Profilquerschnitte in die Meridianebene (rad; ax) hineingedreht dargestellt sind. Fig. 3 wird im Folgenden in Zusammenschau mit Fig. 4 erläutert werden, in welcher eine schematische Perspektivansicht der aus dem Strangprofil 26 hergestellten Schaufel 20 abgebildet ist. Da das Strangprofil 26 grundsätzlich als "endloses" Band ausgebildet sein kann, kann das Strangprofil 26 je nach gewünschter Höhe zunächst in radialer Richtung (rad.) zurechtgeschnitten werden. Wenn das Strangprofil 26 bereits die gewünschte Höhe aufweist, kann dieser Schritt natürlich entfallen. In Abhängigkeit der gewünschten Bauform der Schaufel 20 kann das Strangprofil 26 anschließend umgebogen bzw. vertwistet und/oder überwölbt werden, wodurch sich die in Fig. 4 erkennbare Wölbung IV der Schaufel 20 mit radial veränderlichen Kreisbögen ergibt. Auch bei kleinen Abmessungen der Schaufel 20 wird hierdurch eine hochgenaue Vorderkantengeometrie bei geringen Fertigungskosten erzielt.

Falls eine Schaufel 20 mit einer radial veränderlichen axialen Erstreckung gewünscht ist, kann das Strangprofil 26 bzw. die Schaufel 20 entsprechend zurückgeschnitten werden, so dass aus dem Strangprofil 26 auf einfache Weise Schaufeln 20 mit unterschiedlich langen Bauformen und entsprechend variierenden Hinterkanten 24, 24" usw. realisiert werden können. Eine solcher Rückschnitt kann beispielsweise entlang der in Fig. 3 gezeigten Schnittebene III erfolgen. Aus Festigkeitsgründen kann für die Herstellung eines Nachleitrads 18 eine Kombination von kürzeren Schaufeln 20 mit wenigen langen Schaufeln 20 sinnvoll sein. Hierzu kann je nach gewünschter Länge entweder dasselbe Strangprofil 26 oder ein Strangprofil 26 mit einer alternativen Querschnittsfläche verwendet werden, bei dem beispielsweise einfach der zweite Konstantbereich 36 entsprechend verlängert wird bzw. einen größeren prozentualen Anteil X/LAX an der Gesamtlänge LAX des Strangprofils 26 einnimmt. Die Verformung dieses längeren Strangprofils 26 kann dann vorzugsweise auf die gleiche Art wie bei der kurzen Schaufelform erfolgen, so dass gerade Blechenden stehen bleiben, die dann im Nachleitrad 18 zusätzlich strukturelle Aufgaben übernehmen können. Weiterhin kann vorgesehen sein, dass das Strangprofil 26 bzw. die Schaufel 20 entlang einer in einem Winkel zur Querschnittsfläche angeordneten Rückschnittebene getrennt wird, um eine entsprechend profilierte Schaufel 20 zu erhalten. Die Schaufel 20 kann dann in an sich bekannter Weise zur Herstellung des Nachleitrads 18 verwendet werden. Somit wird bei minimalen Fertigungskosten ein zuverlässiger und effizienter Betrieb des Flugzeugtriebwerks 10 möglich. Begünstigt wird diese Fertigungsmethode dadurch, dass TEC Schaufeln 20 üblicherweise nur eine geringe Wölbung IV und axiale Abströmung haben, so dass eine exakte Profilform insbesondere an der Vorderkante 22 benötigt wird.

## Patentansprüche

1. Strangprofil (26) zur Herstellung einer Schaufel (20) eines Nachleitrads (18) einer Turbomaschine, welches Strangprofil (26) eine Querschnittsfläche mit einer axialen Länge LAX und einer auf die axiale Länge LAX bezogenen relativen Dicke D/LAX aufweist, wobei die Querschnittsfläche entlang ihrer axialen Länge LAX folgende aneinander anschließende Bereiche aufweist:
- einen zumindest annähernd achsensymmetrischen Vorderkantenbereich (28);
- einen ersten Übergangsbereich (30) mit einer entlang des ersten Übergangsbereichs (30) variierenden relativen Dicke D/LAX;
- einen ersten Konstantbereich (32) mit einer entlang des ersten Konstantbereichs (32) zumindest im Wesentlichen konstanten relativen Dicke D/LAX, der bezogen auf eine Vorderkante (22) des Strangprofils (26) frühestens bei 10 % LAX beginnt und spätestens bei 50 % LAX endet;
- einen zweiten Übergangsbereich (34) mit einer entlang des zweiten Übergangsbereichs (34) variierenden relativen Dicke D/LAX, der bezogen auf die Vorderkante (22) des Strangprofils (26) frühestens bei 30 % LAX beginnt und spätestens bei 90 % LAX endet;
- einen zweiten Konstantbereich (36) mit einer entlang des zweiten Konstantbereichs (36) zumindest im Wesentlichen konstanten relativen Dicke D/LAX und einer axialen Länge X von höchstens 40 % LAX; und
- einen zumindest annähernd achsensymmetrischen Hinterkantenbereich (38);
wobei das Strangprofil (26) eine Saugseite (40) mit einer entlang der axialen Länge LAX zumindest überwiegend ebenen Saugseitengrundform aufweist.

2. Strangprofil (26) nach Anspruch 1,
**dadurch gekennzeichnet, dass**
der Vorderkantenbereich (28) und/oder der Hinterkantenbereich (38) zumindest im Wesentlichen kreissegmentförmig mit einem Kreissegmentdurchmesser zwischen 1 % und 5 % LAX, insbesondere zwischen 2 % und 4 % LAX ausgebildet ist.

3. Strangprofil (26) nach Anspruch 1 oder 2,
**dadurch gekennzeichnet, dass**
der erste Konstantbereich (32) eine relative Dicke D/LAX zwischen 3 % und 6 % LAX, vorzugsweise von etwa 4 % LAX besitzt und/oder dass sich der erste Konstantbereich (32) bezogen auf die Vorderkante (22) des Strangprofils (26) im Bereich von etwa 20 % bis etwa 40 % LAX erstreckt.

4. Strangprofil (26) nach einem der Ansprüche 1 bis 3,
**dadurch gekennzeichnet, dass**
der erste Übergangsbereich (30) eine axialen Länge X von höchstens 20 % LAX aufweist und/oder dass der zweite Übergangsbereich (34) bezogen auf die Vorderkante (22) des Strangprofils (26) spätestens bei etwa 80 % LAX endet.

5. Strangprofil (26) nach einem der Ansprüche 1 bis 4,
**dadurch gekennzeichnet, dass**
dieses eine Druckseite (42) mit einer zumindest im Bereich des zweiten Übergangsbereichs (34) etwa S-förmig gekrümmten Druckseitengrundform aufweist.

6. Strangprofil (26) nach einem der Ansprüche 1 bis 5,
**dadurch gekennzeichnet, dass**
dieses aus Metall oder einer Metalllegierung, insbesondere einer hochtemperaturfesten Metalllegierung besteht und/oder durch Strangpressen hergestellt ist.

7. Verfahren zum Herstellen einer Schaufel (20) eines Nachleitrads (18) einer Turbomaschine, bei welchem ein Strangprofil (26) nach einem der Ansprüche 1 bis 6 bereitgestellt und die Schaufel (20) aus dem Strangprofil (26) mittels wenigstens eines Fertigungsverfahrens aus der Gruppe Umformverfahren und Trennverfahren hergestellt wird.

8. Verfahren nach Anspruch 7,
**dadurch gekennzeichnet, dass**
zum Herstellen der Schaufel (20) zumindest die Schritte:
- Umformen des Strangprofils (26) zumindest im Vorderkantenbereich (28); und
- Trennen des Strangprofils (26) in wenigstens einem dem ersten Übergangsbereich (30) nachgelagerten Bereich
durchgeführt werden.

9. Verfahren nach Anspruch 7 oder 8,
**dadurch gekennzeichnet, dass**
das Strangprofil (26) im zweiten Konstantbereich (36) und/oder entlang einer senkrecht zur Querschnittsfläche angeordneten Schnittebene oder entlang einer parallel zur Querschnittsfläche angeordneten Schnittebene oder entlang einer in einem Winkel zur Querschnittsfläche angeordneten Rückschnittebene getrennt wird.

## Claims

1. Extruded profile (26) for producing a blade (20) of a guide wheel (18) of a turbomachine, which extruded profile (26) has a cross-sectional area having an axial length LAX and a thickness D/LAX relative to the axial length LAX, wherein the cross-sectional area along the axial length LAX thereof has the following mutually adjoining regions:
- an at least approximately axially symmetrical leading-edge region (28);
- a first transition region (30) having a relative thickness D/LAX that varies along the first transition region (30);
- a first constant region (32) having a relative thickness D/LAX that is at least substantially constant along the first constant region (32), which first constant region, relative to a leading edge (22) of the extruded profile (26), begins at the closest at 10% LAX and ends at the furthest at 50% LAX;
- a second transition region (34) having a relative thickness D/LAX that varies along the second transition region (34), which second transition region, relative to the leading edge (22) of the extruded profile (26), begins at the closest at 30% LAX and ends at the furthest at 90% LAX;
- a second constant region (36) having a relative thickness D/LAX that is at least substantially constant along the second constant region (36) and having an axial length X of at most 40% LAX; and
- an at least approximately axially symmetrical trailing-edge region (38);
wherein the extruded profile (26) has a suction side (40) having a suction-side basic shape that is at least predominantly planar along the axial length LAX.

2. Extruded profile (26) according to claim 1, **characterized in that** the leading-edge region (28) and/or the trailing-edge region (38) is at least substantially in the shape of a circular segment having a circular segment diameter of between 1% and 5% LAX, in particular between 2% and 4% LAX.

3. Extruded profile (26) according to either claim 1 or claim 2, **characterized in that** the first constant region (32) has a relative thickness D/LAX of between 3% and 6% LAX, preferably of approximately 4% LAX, and/or **in that** the first constant region (32), relative to the leading edge (22) of the extruded profile (26), extends in the range of from approximately 20% to approximately 40% LAX.

4. Extruded profile (26) according to any of claims 1 to 3, **characterized in that** the first transition region (30) has an axial length X of at most 20% LAX and/or **in that** the second transition region (34), relative to the leading edge (22) of the extruded profile (26), ends at the furthest at approximately 80% LAX.

5. Extruded profile (26) according to any of claims 1 to 4, **characterized in that** said profile has a pressure side (42) having a pressure-side basic shape that is curved approximately in the shape of an S at least in the region of the second transition region (34).

6. Extruded profile (26) according to any of claims 1 to 5, **characterized in that** said profile consists of metal or a metal alloy, in particular a high-temperature-resistant metal alloy, and/or is produced by extrusion.

7. Method for producing a blade (20) of a guide wheel (18) of a turbomachine, in which an extruded profile (26) according to any of claims 1 to 6 is provided and the blade (20) is produced from the extruded profile (26) by means of at least one manufacturing method from the group of forming methods and separation methods.

8. The method according to claim 7, **characterized in that**, in order to produce the blade (20), at least the steps of:
- forming the extruded profile (26) at least in the leading-edge region (28); and
- separating the extruded profile (26) in at least one region downstream of the first transition region (30),
are carried out.

9. Method according to either claim 7 or claim 8, **characterized in that** the extruded profile (26) is separated in the second constant region (36) and/or along a sectional plane arranged perpendicularly to the cross-sectional area or along a sectional plane arranged in parallel with the cross-sectional area or along a rear sectional plane arranged at an angle to the cross-sectional area.

## Revendications

1. Profilé extrudé (26) destiné à la fabrication d'une aube (20) d'une roue directrice arrière (18) d'une turbomachine, lequel profilé extrudé (26) a une section transversale d'une longueur axiale LAX et une épaisseur relative D/LAX par rapport à la longueur axiale LAX, la section transversale comportant, sur sa longueur axiale LAX, les zones adjacentes suivantes :
- une zone de bord avant (28) au moins approximativement axisymétrique ;
- une première zone de transition (30) ayant une épaisseur relative D/LAX qui varie le long de la première zone de transition (30) ;
- une première zone constante (32) qui a une épaisseur relative D/LAX au moins sensiblement constante le long de la première zone constante (32), et qui, par rapport à un bord d'attaque (22) du profilé extrudé (26), commence au plus tôt à 10 % de la LAX et se termine au plus tard à 50 % de la LAX ;
- une seconde zone de transition (34) qui a une épaisseur relative D/LAX variant le long de la seconde zone de transition (34), et qui, par rapport au bord d'attaque (22) du profilé extrudé (26), commence au plus tôt à 30 % de la LAX et se termine au plus tard à 90 % de la LAX ;
- une seconde zone constante (36) ayant une épaisseur relative D/LAX au moins sensiblement constante le long de la seconde zone constante (36), et une longueur axiale X n'excédant pas 40 % de la LAX ; et
- une zone de bord arrière (38) au moins approximativement axisymétrique ;
le profilé extrudé (26) comportant un côté aspiration (40) ayant une forme de base côté aspiration au moins sensiblement plane sur la longueur axiale LAX.

2. Profilé extrudé (26) selon la revendication 1, **caractérisé en ce que** la zone de bord avant (28) et/ou la zone de bord arrière (38) a au moins sensiblement une forme de segment circulaire ayant un diamètre de segment circulaire compris entre 1 % et 5 % de la LAX, et en particulier entre 2 % et 4 % de la LAX.

3. Profilé extrudé (26) selon la revendication 1 ou 2, **caractérisé en ce que** la première zone constante (32) a une épaisseur relative D/LAX comprise entre 3 % et 6 % de la LAX, de préférence d'environ 4 % de la LAX et/ou **en ce que** la première zone constante (32) s'étend, par rapport au bord avant (22) du profilé extrudé (26), dans la plage d'environ 20 % à environ 40 % de la LAX.

4. Profilé extrudé (26) selon l'une des revendications 1 à 3, **caractérisé en ce que** la première zone de transition (30) a une longueur axiale X n'excédant pas 20 % de la LAX et/ou **en ce que** la seconde zone de transition (34) se termine, par rapport au bord d'attaque (22) du profilé extrudé (26) au plus tard à environ 80 % de la LAX.

5. Profilé extrudé (26) selon l'une des revendications 1 à 4, **caractérisé en ce qu'**il comporte un côté sous pression (42) ayant une forme de base côté sous pression à peu près en forme de S au moins dans la région de la seconde zone de transition (34).

6. Profilé extrudé (26) selon l'une des revendications 1 à 5, **caractérisé en ce qu'**il est en métal ou en un alliage métallique, en particulier un alliage métallique résistant aux hautes températures et/ou **en ce qu'**il est fabriqué par extrusion.

7. Procédé de fabrication d'une aube (20) d'une roue directrice arrière (18) d'une turbomachine, procédé dans lequel un profilé extrudé (26) selon l'une des revendications 1 à 6 est fourni et l'aube (20) est fabriquée à partir du profilé extrudé (26) par au moins un procédé de fabrication du groupe comprenant un procédé de formage et un procédé de séparation.

8. Procédé selon la revendication 7, **caractérisé en ce que**, pour fabriquer l'aube (20), on exécute au moins les étapes de :
- formage du profilé extrudé (26) au moins dans la zone de bord avant (28) ; et
- séparation du profilé extrudé (26) dans au moins une zone en aval de la première zone de transition (30).

9. Procédé selon la revendication 7 ou 8, **caractérisé en ce que** le profilé extrudé (26) est séparé dans la seconde zone constante (36) et/ou le long d'un plan de coupe perpendiculaire à la section transversale ou de long d'un plan de coupe parallèle à la section transversale ou le long d'un plan de coupe arrière disposé angulairement par rapport à la section transversale.
